# EUROPÄISCHE PATENTANMELDUNG

(11) **EP 1 260 749 A1**
(43) Veröffentlichungstag der Anmeldung: **27.11.2002**
(21) Anmeldenummer: 02010005.3
(22) Anmeldetag: 04.05.2002
(51) Int. Cl.: F16L 15/00, F16L 9/147

(54) **Mehrschichtrohrleitung**

(30) Priorität: 25.05.2001 DE 10125434
(71) Anmelder: Uponor Innovation AB, 513 81 Fristad (SE)
(72) Erfinder: Trindeitmar, Günter, 48607 Ochtrup (DE); Kempers, Franz, 48607 Ochtrup (DE)
(74) Vertreter: Hilleringmann, Jochen, Dipl.-Ing.

(57) **Zusammenfassung**

Die Mehrschichtrohrleitung ist mit einem Rohrstück (12) mit einer Wandung (14) versehen, die ein Innenrohr (24) aus einem Kunststoffmaterial, ein das Innenrohr (24) umgebendes Rohr (26) aus einem Metall und ein das Metallrohr (26) umgebendes Außenrohr (28) aus einem Kunststoffmaterial aufweist. An mindestens einem Ende (16) des Rohrstücks (12) ist von außen und/oder von innen in die Wandung (14) unter plastischer Verformung des Metallrohres (26) und des Innenrohres (24) und/oder des Außenrohres (28) mindestens eine ein Gewinde (20) bildende schraubenlinienförmige Vertiefung (30) ausgebildet.

## Beschreibung

Die Erfindung betrifft eine Mehrschichtrohrleitung mit vereinfachter Verbindungstechnik zum Verbinden einzelner Rohrstücke, wobei die Mehrschichtrohrleitung insbesondere für den Transport von Schüttgut und für Druckluft geeignet ist.

Medienführenden Rohrleitungen werden in einer Vielzahl von Industriezweigen eingesetzt. Ein Einsatzgebiet ist beispielsweise der Transport von Schüttgütern beispielsweise beim Be- und Entladen von Silos, Transportfahrzeugen o.dgl.

Aus diversen Gründen ist es wünschenswert, wenn derartige Rohrleitungen aus Kunststoff bestehen. Der Vorteil von Kunststoff ist in der Korrosionsbeständigkeit und der geringen Oberflächenreibung zu sehen.

Um Kunststoffleitungen auf einfache Art und Weise verbinden zu können, ist es wünschenswert, wenn diese Verbindungen als Schraubverbindungen ausgebildet sind. Hier könnte man sich eine Lösung dahingehend vorstellen, dass in die Außenseite der Rohrleitungswandung ein Gewinde eingebracht wird, das dann mit dem Innengewinde einer Muffe oder eines Verbinders oder Anschlussstücks zusammengreift. Ein gewisser Nachteil dieser Verbindungstechnik ist darin zu sehen, dass die Gewinde bei großen Axialkräften abscheren könnten.

Aus DE-A-41 12 369 ist ein Verbindungselement für Rohre mit einer Kunststoffoberfläche bekannt, bei der das Rohr in eine mit Dichtvorsprüngen in Gewindeform versehene Aufnahme eines Verbindungselements eingeschraubt wird. Hierdurch wird der Außen- bzw. Innenseite des Rohres eine Gewindeform verliehen, die sich jedoch ausschließlich im oberflächennahen Bereich des Rohres erstreckt. Bei dem Rohr handelt es sich um ein Rohr mit einer Wandung, die durchgehend aus Kunststoffmaterial besteht.

Der Erfindung liegt daher die Aufgabe zu Grunde, eine Rohrleitung zu schaffen, deren in Medienkontakt stehende Innenseite aus Kunststoff besteht und die sich dennoch durch eine Verschraubungstechnik mit anderen Rohrleitungen, Muffen, Fittingen o.dgl. Anschlussstücke verbinden lässt.

Zur Lösung dieser Aufgabe wird mit der Erfindung eine Mehrschichtrohrleitung vorgeschlagen, die versehen ist mit
- einem Rohrstück mit einer Wandung, die ein Innenrohr aus einem Kunststoffmaterial, ein das Innenrohr umgebendes Rohr aus einem Metall und ein das Metallrohr umgebendes Außenrohr aus einem Kunststoffmaterial aufweist,
- wobei an mindestens einem Ende des Rohrstücks von außen und/oder von innen in die Wandung unter plastischer Verformung des Metallrohres und des Innenrohres und/oder des Außenrohres mindestens eine ein Gewinde bildende schraubenlinienförmige Vertiefung ausgebildet ist.

Erfindungsgemäß umfasst die Rohrleitung also ein oder mehrere Rohrstücke, deren Wandungen mehrlagig aufgebaut sind. Die Innenseite der Wandung wird von einem Innenrohr aus einem Kunststoffmaterial gebildet, während die Außenseite des Rohrstücks aus einem Außenrohr aus ebenfalls einem Kunststoffmaterial gebildet ist. Zwischen diesen beiden Rohren befindet sich ein Metallrohr, das beispielsweise aus Aluminium oder einem anderen relativ "weichen" Metall besteht. Diese drei Rohre sind insbesondere vollflächig miteinander verbunden, und zwar vorzugsweise durch Verklebung.

An mindestens einem Ende eines derartigen Rohrstücks befindet sich eine schraubenlinienförmige Vertiefung, die nach Art eines Gewindegangs verläuft, und zwar entweder an der Außen- und/oder an der Innenseite des Rohrstücks. Diese Vertiefungsrille ist unter plastischer Verformung des Metallrohres und des Innenrohres und/oder des Außenrohres ausgebildet. Durch die Verformung des Metallrohres wird dem mit einem derartigen Gewinde versehenen Rohrstück ein ausreichender Widerstand gegen Axialkräfte im Bereich des Gewindes verliehen.

Bei der erfindungsgemäßen Rohrleitung wird die Stabilität des Rohrstücks in erster Linie durch das Innenrohr aufgebracht. Das Metallrohr weist eine wesentlich geringere Materialdicke als das Innenrohr. Hier sind Dickenverhältnisse von 1/2 bis 1/10 und noch geringer denkbar. Das Metallrohr ist außen von dem Außenrohr umgeben, das in erster Linie Schutzfunktion für das Metallrohr hat. Die Dicke der Wandung des Außenrohres liegt im Bereich der Dicke der Wandung des Metallrohres und insbesondere etwas darunter.

Die gewindeförmig verlaufende Vertiefung an mindestens einem Ende des Rohrstücks kann durch Andrücken eines Verformungskörpers gegen die Wandung des Rohrstücks in diese eingeprägt sein. Man könnte das Rohrstück an seinem Ende mittels einer (Segment-)Presse zur Bildung des Gewindes verformen; alternativ dazu bietet es sich aber auch an, das Gewinde "einzurollen", d.h. die Umfangsfläche oder den Umfangsrand eines rotierenden Andrückkörpers mit Kraft gegen die Außen- oder Innenseite des Rohres unter Drehung desselben zu drücken, so dass sich schließlich die schraubenlinienförmige (Rillen-)Vertiefung ergibt.

Die Erfindung wird nachfolgend anhand der Zeichnung näher erläutert. Im einzelnen zeigen:
- Fig. 1: einen Abschnitt einer erfindungsgemäßen Mehrschichtrohrleitung mit zwei Rohrstücken und einem diese verbindenden Schraubverbinder und

- Fig. 2: einen Schnitt durch die Wandung des Rohrstücks im Bereich II der Fig. 1 zur Verdeutlichung der Verformung der Rohrstückwandung durch das eingerollte Außengewinde.

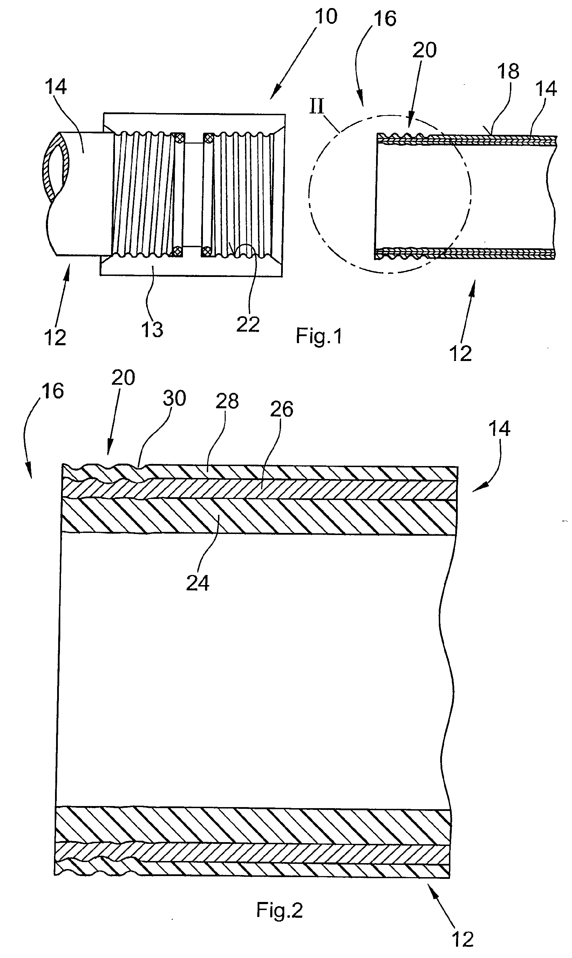

Fig. 1 zeigt eine Rohrleitung 10 mit zwei Rohrstücken 12 und einem Schraubverbinder 13. Die beiden Rohrstücke 12 weisen Mehrschichtrohrwandungen 14 auf und sind an ihren Enden 16 mit in die Außenseite 18 eingeprägten Gewinden 20 versehen, die mit Innengewinden 22 des Schraubverbinders 13 zusammenwirken.

Der Aufbau der Rohrwandung 14 jedes Rohrstücks 12 ist in Fig. 2 im Schnitt dargestellt. Das Rohrstück 12 weist ein Innenrohr 24 aus einem Kunststoffmaterial (beispielsweise vernetztes Polyethylen) auf, das von einem Metallrohr 26 aus Aluminium umgeben ist. Diese beiden Rohre sind miteinander verklebt. Außen um das Metallrohr herum befindet sich noch ein Außenrohr 28 aus ebenfalls einem Kunststoffmaterial (beispielsweise wiederum vernetzten Polyethylen). Auch das Außenrohr 28 ist mit dem Metallrohr 26 verklebt.

Das Außengewinde 20 wird durch lokale Verformung des Endes 16 des Rohrstücks 12 gebildet. Das Außengewinde 20 ist durch Einbringung einer schraubenlinienförmigen Rillenvertiefung 30 in die Rohrwandung 14 ausgebildet. Dabei ist nicht nur das Außenrohr 28 örtlich plastisch verformt sondern auch das Metallrohr 26 und in gewissen Grenzen sogar noch das Innenrohr 24. Auf Grund der Verformung des Metallrohres 26 kann dieses an seinem Ende 16 hohe axiale Kräfte aufnehmen, so dass die Gefahr des Abscherens des Gewindes 20 vom Rohrstück 12 nicht mehr gegeben ist.

Im hier beschriebenen Ausführungsbeispiel weist das Innenrohr beispielsweise eine Wanddicke von 1,8 mm auf, währen das Außenrohr eine Wanddicke von 0,7 mm hat. Das Metallrohr weist beispielsweise eine Wanddicke von 1 mm auf. Diese Dimensionsangaben sollen lediglich beispielhaft verstanden werden; selbstverständlich sind auch andere Wanddickenkombinationen denkbar. In jedem Fall sind die Wanddicken von Außenrohr 28 und Metallrohr 26 sowie deren Materialien derart gewählt, dass sich durch Verformung der Wandung 14 in diesen beiden Schichten ein Gewinde aufprägen lässt, und zwar unter Verformung des Metallrohres 26.

## Patentansprüche

1. Mehrschichtrohrleitung mit
- einem Rohrstück (12) mit einer Wandung (14), die ein Innenrohr (24) aus einem Kunststoffmaterial, ein das Innenrohr (24) umgebendes Rohr (26) aus einem Metall und ein das Metallrohr (26) umgebendes Außenrohr (28) aus einem Kunststoffmaterial aufweist,
- wobei an mindestens einem Ende (16) des Rohrstücks (12) von außen und/oder von innen in die Wandung (14) unter plastischer Verformung des Metallrohres (26) und des Innenrohres (24) und/oder des Außenrohres (28) mindestens eine ein Gewinde (20) bildende schraubenlinienförmige Vertiefung (30) ausgebildet ist.

2. Mehrschichtrohrleitung nach Anspruch 1, **dadurch gekennzeichnet, dass** die schraubenlinienförmige Vertiefung (30) durch Andrücken eines Verformungskörpers gegen die Wandung (14) in diese eingeprägt ist.
